# EUROPEAN PATENT APPLICATION

(11) **EP 4 303 092 A1**
(43) Date of publication of application: **10.01.2024**
(21) Application number: 23180352.9
(22) Date of filing: 20.06.2023
(51) Int. Cl.: B61L 15/00, G01B 15/00

(54) **RADAR SYSTEM FOR DETERMINING A STATUS OF A WHEEL**

(30) Priority: 21.06.2022 SE 2250761
(71) Applicant: Railway Metrics and Dynamics Sweden AB, 11143 Stockholm (SE)
(72) Inventor: LINDQVIST, Jan, 18151 Lidingö (SE)
(74) Representative: AWA Sweden AB

(57) **Abstract**

There is disclosed a radar system (100) for determining a status of at least one wheel (110) of a train, comprising at least one radar unit (120) arranged on the train. The radar unit comprises an emitter (130) configured to emit radio waves (105) towards the at least one wheel and a detector (140), configured to detect at least a portion of the radio waves reflected from the at least one wheel and generate detector data. The radar system is configured to determine a wheel status at least partially based on the generated detector data.

## Description

### FIELD OF THE INVENTION

The present invention generally relates to a system and method for determining a status of a wheel of a train. In particular, the present invention relates to a system and method for determining a status of a train wheel using radar.

### BACKGROUND OF THE INVENTION

Train wheels and rails are enduring high forces upon interaction of a moving railway wagon with the rails, this may be harmful to the wheels, the bogies, the wagon and the rail. If the wagon operates with defective wheels, the resultant damage may be costly in terms of wheel or rail wear, or in extreme cases result in dangerous derailments.

To address these issues, technology has been developed to determine the status of a train wheel. Examples of such technology are portable measuring devices using optical instruments in order to measure the profile of a wheel, during maintenance of a train, wagon or bogie, while in a workshop or service facility. Further examples are systems arranged next to a railway measuring the wheels e.g. using laser, and systems arranged on the trains for determining e.g. distances between the rail and the wheel using laser light.

It is of interest to detect defects in the train wheels as early as possible, to minimize the risks related to operating a train with damaged wheels. Once a defect is detected the train operators may replace a wheel or fix it. It is also of interest to detect changes in the status of a wheel over time, to detect a defect or damage before it occurs.

Thus, there is a need for an improved system for monitoring the status of a train wheel in order to detect problems with the wheels in time.

### SUMMARY OF THE INVENTION

It is an object of the present invention to provide a system for determining a status of a train wheel, in order to detect e.g. wheel defects, rail defects and changes in a contour of the wheel, wherein the status may be related to a maintenance status. It is a further objective to detect a defect or damage before they pose a serious risk, to allow suitable maintenance measures to be taken. It is a further object to provide a method for determining a status of wheel.

According to a first aspect of the present invention, there is provided a radar system for determining a status of at least one wheel of a train. The system comprises at least one radar unit arranged on the train, wherein the at least one radar unit comprises an emitter configured to emit radio waves towards the at least one wheel, and a detector configured to detect at least a portion of the radio waves reflected from the at least one wheel and generate detector data. The radar system is configured to determine a wheel status at least partially based on the generated detector data.

According to a second aspect of the present invention, there is provided a method for determining a status of at least one wheel of a train using a radar system, wherein the radar system comprises at least one radar unit, having an emitter configured to emit radio waves and a detector configured to detect radio waves, arranged on the train. The method comprises emitting radio waves towards at least one wheel, by the emitter, and generating detector data based on detected radio waves, by the detector. The method further comprises determining a wheel status at least partially based on the detector data.

Thus, the first and second aspect of the present invention are based on the common concept or idea of providing a more reliable and more accurate system for determining the status of (a) train wheel(s), so that the train wheel(s) may be monitored, and it can be determined if the wheel(s) and/or train needs maintenance. The radar system specifically uses radar waves to determine a status of the wheel(s) of a train. Furthermore, the radar system comprises (a) radar unit(s) that is (are) arranged on the train. The wheel status may comprise information/data on the surface/contour/profile of the wheel(s), wherein said information/data provides information on e.g. wear and/or damage to the wheel and/or rail, and/or parameters related to the profile of the wheel. The determined wheel status may indicate a maintenance status, and may be used for planning maintenance of trains and/or their wheels. The wheel status may indicate a level of wear and/or damage to the wheel(s).

The present invention is advantageous in that it uses electromagnetic radiation in the radio-spectrum. Radio waves are beneficial to use because they can penetrate for example dirt on the wheel(s) or the radar unit(s) itself without losing information, e.g. spectral information. This provides a system with higher fidelity and accuracy, usable in realistic scenarios where the presence of dirt, or other obstructions, is common, without losing information, due to e.g. attenuation. Furthermore, by using radio waves, the system may be more robust and may be cheaper than options such as LIDAR and ultrasound, due to e.g. more robust and/or cheaper components.

It will be further appreciated that the radar system is arranged on the train, allowing the radar system to determine a status of the wheel(s) at any point in time, both when the train is moving, and when the train is parked. This may provide, at least to some extent, continuous, real-time information gathering on a status of the wheel(s).

It will be further appreciated that the radar system may indirectly provide information on a status of a rail on which the train travels, since a status of the wheel may be determined during travel and the status of the wheel combined with a point in time may indicate where a rail is damaged.

The radar system according to the first aspect of the present invention comprises at least one radar unit, wherein the radar unit is arranged on the train. By the phrasing "arranged on the train", it is here meant mounting, attaching, fixing and/or securing the at least one radar unit to the train, for example to a wagon and/or bogie of the train. For example, each wheel may have one or more radar units arranged in the wheelhouse of that particular wheel, configured to generate detector data for one specific wheel.

The at least one radar unit comprises an emitter, configured to emit radio waves towards the at least one wheel. The emitter may be any device, component or unit which can generate electromagnetic radiation with a wavelength in the radio spectrum.

The at least one radar unit comprises a detector, configured to detect at least a portion of the radio waves reflected from the at least one wheel and generate detector data. The detector may be any device, component or unit that can receive/detect electromagnetic radiation in the radio spectrum, e.g. radio wave echoes. It is to be understood that the at least one radar unit may comprise one or more emitters and detectors respectively. Furthermore, it is to be understood that the at least one radar unit may constitute the radar system. In other words, the whole radar system may be the one or more radar unit and its (their) components.

The radar system is configured to determine a wheel status at least partially based on the generated detector data, e.g. by a processor. The wheel status contains information on a status of the at least one wheel. The wheel status may be a maintenance status, related to the surface/profile/contour and/or wear and/or damage of the at least one wheel. The wheel status may comprise at least part of the detector data. The wheel status may comprise information on the at least one wheel, based on the detector response. The wheel status may comprise information on a surface/profile/contour of the at least one wheel, which may be calculated from the generated detector data. The wheel status may be calculated using machine learning models. For example, a machine learning model is provided with the detector data as input, and it outputs the wheel status. The determining/calculation of the wheel status may comprise providing a metric representing the status of the wheel in terms of wear and/or damage. The profile/surface of the at least one wheel may be calculated directly/indirectly from the detector data. The wheel status may comprise information on the status of the wheel, related to e.g. wearing, tearing, damages and/or defects. The wheel status may comprise information on parameters related to the flange and/or running surface of the at least one wheel.

According to an embodiment of the present invention, the radar system is configured to determine a wheel status based on at least one of the time travelled and the incident angle to the at least one radar unit for a detected radio wave of the radio waves. Based on the time travelled and/or the incident angle, one or more distances to different spots on the surface of the at least one wheel from the at least one radar unit may be determined. The wheel status may be at least partially determined from the detector data, and may contain information about e.g. the incident angle, and the time travelled. The time travelled may be determined from comparing when the radio waves are emitted and when the radio waves are detected. By knowing the incident angle and time travelled for a radio wave, it is possible to extrapolate a distance to a part of the at least one wheel. Consequently, a part of a contour of the at least one wheel may be determined with information from a plurality of detected radio waves.

According to an embodiment of the present invention, the radar system is configured to determine the wheel status at least partially based on a predetermined wheel status and the wheel status. The wheel status may be determined by using a combination of detector data and predetermined parameters relating to the particular wheel and its setup in the bogie. In other words, the wheel status based on the generated detector data may be compared to a predetermined wheel status in order to determine a difference between the current wheel status and the predetermined wheel status. The wheel status may comprise wheel parameters, e.g. height/depth/width of different parts of the at least one wheel, e.g. the flange and/or the rolling surface. In other words, the wheel status may comprise metrics/wheel parameters that define the profile and/or shape of the surface/profile of the at least one wheel.

The predetermined wheel status and/or predetermined wheel parameters may be determined by calibration of the radar system. The calibration may be performed when the at least one wheel is new and/or when the wheel has been turned down, i.e. grinded down to an acceptable shape for operation. The calibration may be performed by the at least one radar unit. The detector of the at least one radar unit may generate detector data of a new wheel, or recently turned down wheel, and determining a wheel status based on the generated detector data.

The wheel status may comprise a turning metric. The turning metric indicate a required turning scheme for the wheel monitored by the radar unit(s). The required turning scheme represents information on how to turn down the wheel to an acceptable, e.g. optimal and/or safe, shape for operation. The turning metric may be calculated using machine learning models, e.g. based on the detector data from the radar unit(s) and possibly also a predetermined wheel status.

The present embodiment is advantageous in that it improves the accuracy and the fidelity of the determination of a status of the at least one wheel. This is because the present embodiment allows the radar system to compare a previous status of the at least one wheel, before a certain time point, e.g. when the at least one wheel hasn't been used, with a current status of the at least one wheel, in order to facilitate and/or improve the determination of the current status of the at least one wheel.

According to an embodiment of the present invention, the at least one radar unit is arranged on a bogie of the train. The present embodiment is advantageous in that the at least one radar unit may be arranged in close proximity to the at least one wheel. Hence, improved detector data may be provided, e.g. a better resolution may be achieved. Furthermore, less energy may be required to provide good enough detector data. The at least one radar unit may be arranged on the bogie in any manner that allows the emitter to emit radio waves towards the at least one wheel, and the detector to receive a reflected radio wave.

According to an embodiment of the present invention, the radar system comprises a processor configured to determine the wheel status based, at least partially, on the detector data, wherein the wheel status comprises at least one of a wheel parameter and a surface condition of the at least one wheel. The processor may be any device, component, or unit comprising processing circuitry, allowing data operations to be performed, e.g. a micro controller, MCU. The processor may determine the wheel status by calculating one or more wheel parameters, such as height/depth/width of different parts of the surface/profile/contour of the at least one wheel, from the detector data or a combination of detector data and predetermined parameters. The surface condition may be an indication of the status of the at least one wheel, based on the detector data. The surface condition may be one or more metrics which relates to the condition/status of the at least one wheel. The metric may be a single metric which represents the overall condition of the wheel, which can be used to determine if the at least one wheel needs to be taken in for maintenance. The surface condition may comprise a metric that indicates if the at least one wheel has a wheel flat and/or other damages. The surface condition may be determined from the detector data, the one or more wheel parameters and/or predetermined parameters. The predetermined parameter may comprise a threshold value. For example, a metric indicating the status of the at least one wheel may be above or below a certain threshold, which may indicate if the status of the at least one wheel is good or bad and if the at least one wheel requires maintenance. The present embodiment is advantageous in that the radar system may perform more complex operations, for example to calculate a specific parameter of the at least one wheel and/or determine, if the at least one wheel is damaged, if the at least one wheel needs maintenance, and/or if the wear of the wheel, e.g. represented by a surface condition metric, exceeds/subceeds a threshold value. The processor may determine if the at least one wheel is damaged, i.e. has a defect, from the detector data. The processor may determine if the at least one wheel is damaged, i.e. has a defect, by comparing a predetermined parameter/metric/value/threshold with a determined/calculated parameter/metric/value based on the detector data and/or the wheel status for the at least one wheel.

According to an embodiment of the present invention, the at least one radar unit comprises the processor, i.e. the processor may form part of the radar unit. The present embodiment is advantageous in that the at least one radar unit may perform more complex operations. For example, the radar system may perform all calculations needed to determine the wheel status of the at least one wheel in the at least one radar unit. Consequently, the radar system may be more compact, convenient and/or versatile. The present embodiment is further advantageous in that the power consumption of the at least one radar unit may be reduced. This may be because it can take less energy to process the data and determine the wheel status in the at least one radar unit compared to transmitting the detector data and processing elsewhere.

According to an embodiment of the present invention, the wheel parameter comprises at least one of a flange height, a flange thickness and a flange slope quota. The present embodiment is advantageous in that these parameters provide information on the status of a wheel in less complex terms. These parameters may be relayed to provide information in a quick and efficient manner on the status of the at least one wheel.

According to an embodiment of the present invention, the emitted radio waves are coherent radar pulses. The present embodiment is advantageous in that small phase shifts of the reflected radio waves are detectable. Furthermore, signal-to-noise ratio may be improved. For example, the doppler effect may be used to reduce the influence of fixed clutter.

According to an embodiment of the present invention, the radio waves, emitted by the emitter, comprises electromagnetic radiation in the radio spectrum with a frequency in the range of 3Hz - 3000GHz.

According to an embodiment of the present invention, the at least one radar unit comprises an emitter antenna configured to direct the radio waves in a predetermined direction. The antenna may be any device, component, module or element which can interact with the radio waves, in order to direct them in a desired direction, at least partially.

According to an embodiment of the present invention, the emitter antenna comprises a lens unit. The lens unit may comprise one or more lenses. The lens unit may direct radio waves in a desired location, depending on its arrangement and the properties of the one or more lenses in the lens unit. The present embodiment is advantageous in that it provides a practical and efficient way to direct the radio waves.

According to an embodiment of the present invention, the at least one radar unit comprises a wireless transmitter configured to transmit at least part of the detector data and/or the wheel status. The wireless transmitter may transmit to any communication network, cloud service and/or device. For example, the wireless transmitter may transmit to telecommunications network. The present embodiment is advantageous in that the wheel status may be communicated wirelessly, in an easier, efficient and more versatile manner. For example, the radar system may be a system only constituting the at least one radar unit, physically and/or electrically separated from the rest of the train's systems, and still be able to communicate the wheel status to e.g. an operator of the train, a cloud service/server and/or a communication network. The at least one radar unit may transmit at least part of the wheel status and/or the detector data. Furthermore, this is advantageous in that the at least one radar unit may be easier to move, replace, attach and/or remove, since it can communicate wheel status without being physically connected via e.g. wires and/or cords.

According to an embodiment of the present invention, the radar system comprises a control unit, wherein the control unit is configured to receive at least part of the detector data and/or the wheel status from the at least one radar unit. The control unit may be a computer, device, tablet and/or display unit with processing circuitry. The control unit may comprise a receiver configured to receive the wheel status, e.g. a transceiver. The control unit may be arranged on the train. The present embodiment is advantageous in that the radar system may gather information in one central place, e.g. a computer comprising the control unit, allowing e.g. a train operator to access information on a wheel status of the at least one wheel. For example, an operator may see the status of one or more wheels of the train in a continuous manner, e.g. essentially in real-time. The control unit may comprise a wireless transmitter, e.g. a transceiver, in order to send signals to the at least one radar unit in order to control the at least radar unit. Consequently, the radar system may coordinate the at least one radar units. The control unit may comprise a processor and determine a wheel parameter and/or a damage/defect of the at least one wheel based at least partially on the received detector data. In the case where the control unit comprises a processor, the present embodiment is further advantageous in that any processing that needs to be performed by the radar system may be performed away from the at least one radar unit, allowing the at least one radar unit to be smaller and more compact.

According to an embodiment of the present invention, the at least one radar unit comprises at least one attachment unit, configured to removably attach the at least one radar unit to the train. The present embodiment is advantageous in that the at least one radar unit may be removably attached to the train, thus allowing the at least one radar unit to be attached to and removed from the train, e.g. the bogie. The present embodiment allows the radar system to be more versatile and easier to set up. Furthermore, the present embodiment allows e.g. the radar system to be more easily arranged on different types of trains. The present embodiment is further advantageous in that the radar system is more easily moved and/or replaced.

According to an embodiment of the present invention, the attachment unit comprises a magnet unit. The present embodiment is advantageous in that attaching and removing of the at least one radar unit is easier and faster. In particular, this is advantageous since trains, their wagons and/or bogies often comprise metal, allowing the at least one radar unit to be fastened freely on the train at a desired location, in an easy and convenient manner.

According to an embodiment of the present invention, the at least one radar unit comprises a battery. The present embodiment is advantageous in that the at least one radar unit may be self-powered and/or be electrically disconnected from the train. Hence the at least one radar unit may be more easily moved, replaced, attached and/or removed from the train.

According to an embodiment of the present invention, the at least one radar unit is integrally formed. Being "integrally formed" may mean that the at least one radar unit constitutes one single unit and/or may form one single unit. The present embodiment is advantageous in that the at least one radar unit may be more compact. Furthermore, the present embodiment is advantageous in that the at least one radar unit is easier to move, replace, attach to the train and/or remove from the train.

According to an embodiment of the present invention, the radar system comprises a plurality of radar units for the at least one wheel respectively. In other words, a plurality of radar units may be configured to determine a wheel status of a single wheel. The present embodiment is advantageous in that the radar system provides more reliable and accurate determination of the wheel status of the at least one wheel. Multiple radar units provide more data on the status of the at least one wheel, e.g. the contour/surface of the at least one wheel. Multiple radar units may be placed at different locations around a wheel, and provide more information on the status of the wheel, such as the contour/surface of the wheel, compared to using a single radar unit. The present embodiment is further advantageous in that the resolution may increase, providing more accurate determining of the status of the at least one wheel.

### BRIEF DESCRIPTION OF THE DRAWINGS

This and other aspects of the present invention will now be described in more detail, with reference to the appended drawings showing embodiment(s) of the invention.
Fig. 1 schematically illustrates a radar system in accordance with an embodiment of the present invention.
Fig. 2 schematically illustrates a cross section of a train wheel in accordance with an embodiment of the present invention.
Fig. 3 schematically illustrates a radar system in accordance with an embodiment of the present invention.
Fig. 4 schematically illustrates a radar system in accordance with an embodiment of the present invention.
Fig. 5 schematically shows a method for determining a status of at least one wheel of a train in accordance with an embodiment of the present invention.

### DETAILED DESCRIPTION

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

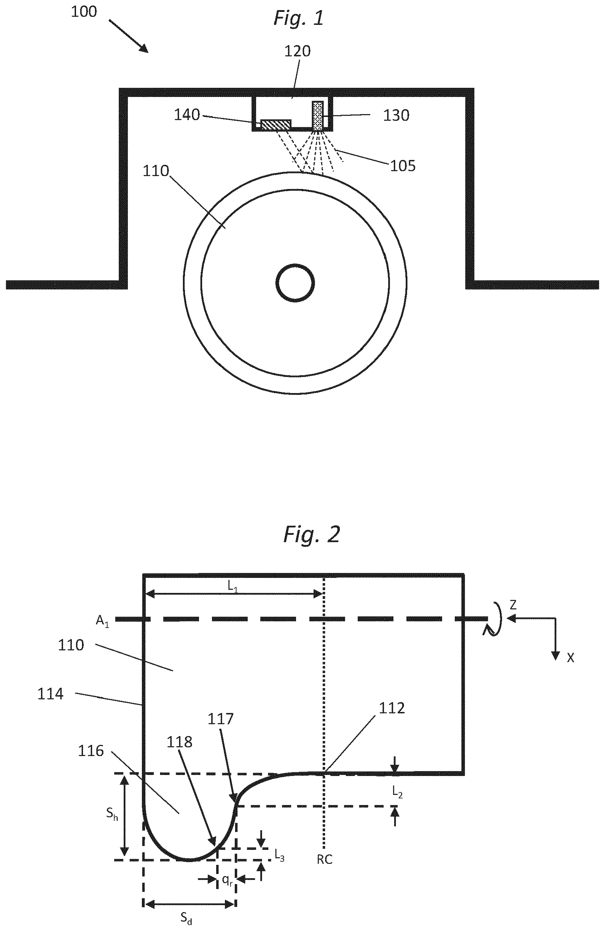

Fig. 1 schematically illustrates a radar system 100 in accordance with an embodiment of the present invention. The radar system 100 comprises (a) radar unit(s) 120, wherein the radar unit(s) 120 is (are) arranged on a train, and is adapted for determining a status of at least one wheel 110 of the train. The radar unit(s) 120 comprise(s) an emitter 130 configured to emit radio waves 105 towards the at least one wheel 110 of the train. The emitter may be configured to emit coherent radar pulses in the range of 3Hz to 300 GHz. The radar unit(s) 120 further comprise(s) a detector 140 configured to detect at least a portion of the radio waves 105 that has been reflected from the at least one wheel 110. The radar system 100 is configured to determine a wheel status at least partially based on the generated detector data, wherein the wheel status contains information on a status of the at least one wheel 110. Typically, each wheel 110 has one or more radar units 120 configured to generate detector data for each wheel 110. The wheel status may be determined/calculated by determining the time travelled and/or the incident angle for a reflected radio wave that was detected by the detector 140.

In Fig. 1, the radar unit(s) 120 is (are) arranged above the wheel 110 in the bogie of the train. However, it is to be understood that the radar unit(s) 120 may be arranged in other locations in proximity to the at least one wheel 110, e.g. in front of and/or behind the at least one wheel 110, in the direction of travel. Furthermore, the radar unit(s) 120 is (are) integrally formed, i.e. formed as one single unit.

The radar system 100 may be configured to generate the wheel status at least partially based on the difference between a predetermined wheel status and a current wheel status, wherein the current contour status is based on the wheel status. The wheel status may comprise a profile/contour of a surface of the at least one wheel 110. For example, the wheel status may comprise at least one wheel parameter and/or a surface condition of the at least one wheel 110. The wheel parameter may comprise a width/height/depth of a part of the profile/contour of the at least one wheel 110, that may be indicative of wear/tear and defects that may pose a risk to the operation of the train and/or the rail. The predetermined wheel status may be determined by manual input of parameters and/or be automatically calibrated when the radar unit(s) 120 is (are) arranged at a specific location, for a specific wheel, in order to determine parameters related to e.g. the profile/contour of the at least one wheel 110. The wheel status may indicate if a wheel needs to be replaced or turned down. When the at least one wheel 110 is turned down, the diameter may become smaller, which changes the distance between an already positioned radar unit 120 and the wheel 110. In the case the at least one wheel 110 is turned down, the predetermined wheel status may be changed accordingly. For example, the predetermined wheel status may be changed by new manual input and/or automatic calibration, to account for the new shape of the wheel 110.

Fig. 2 schematically illustrates a cross section of the at least one train wheel 110 in accordance with an embodiment of the present invention. In Fig.2 a first axis, Z, and a second axis, X, is defined according to the arrows in the figure. The first axis, Z, is arranged along the rotational axis, A₁, of the at least one wheel 110. The second axis, X, is arranged to be perpendicular to the rotational axis of the at least one wheel 110. The at least one train wheel 110 comprises a rolling surface 112. The rolling surface 112 may be defined as a plane which is parallel with the first axis, Z. The dotted line, RC, represents the normal rolling circle of the at least one wheel 110 and extends in a direction parallel with the X-axis. RC passes through the rolling surface 112 at a distance L₁ from an outer rim 114 of the at least one wheel 110, wherein the outer rim 114 extends in a direction parallel to the axis, X. The distance L₁ may be 70 mm. The at least one wheel 110 comprises a flange 116. The flange 116 may be a ridge extending circumferentially around the axis of the at least one wheel 110 at the periphery of the at least one wheel 110. The flange 116 has a flange height, Sₕ, defined as the distance between the rolling surface 112 and the peak/pinnacle/apex/top of the flange 116. The flange 116 has a flange thickness, S_{d}, defined as a distance along the Z-axis, between the outer rim 114 of the at least one wheel 110 and a first location 117 on the flange 116. The first location 117 is defined as a location along the contour of the at least one wheel 110 on the inside of the flange 116, at a distance L₂ from the rolling surface 112, in a direction parallel with the X-axis. The distance L₂ may be 10 mm. The flange 116 has a flange slope quota, qᵣ, defined as the distance, in a direction parallel with the Z-axis, between the first location 117 and a second location 118. The second location 118 is defined as a location along the contour of the at least one wheel 110 on the inside of the flange 116, at a distance L₃, in a direction parallel with the X-axis, from the peak/pinnacle/apex/top of the flange 116. The distance L3 may be 2 mm. The flange height, Sₕ, may fulfil 27.5 mm ≤ Sₕ ≤ 36 mm. The flange thickness, S_{d}, may fulfil 22 mm ≤ S_{d} ≤ 33 mm. The flange slope quota, qᵣ, may fulfil 6.5 mm ≤ qᵣ. The flange height, Sₕ, the flange thickness, S_{d}, and the flange slope quota, qᵣ, may be predetermined values set by operating and maintenance requirements. The flange height, Sₕ, the flange thickness, S_{d}, and the flange slope quota, qᵣ, may be important to monitor, in order to ensure that the train may operate safely and efficiently.

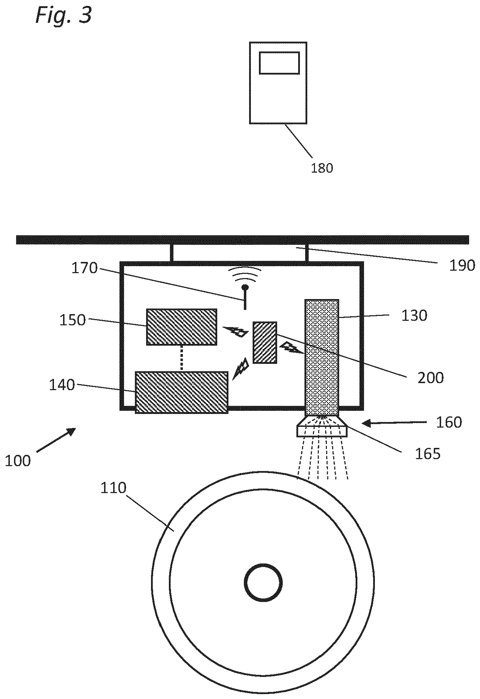

Fig. 3 schematically illustrates a radar system 100 in accordance with an embodiment of the present invention. The radar system comprises (a) radar unit(s) 120 arranged on a train, here the bogie of the train, in proximity to the at least one wheel 110 of the train. The radar unit(s) 120 comprise(s) an attachment unit 190 configured to removably attach the radar unit(s) 120 to the train. The attachment unit 190 may comprise a magnet unit. The magnet unit may comprise one or more magnets configured to attach the radar unit(s) 120 to the train. It is to be understood that the attachment unit 190 may use a combination of a magnet unit and other attaching elements, such as adhesive material and/or mechanical structures. In Fig. 3 the radar unit(s) 120 is (are) integrally formed. In other words, the radar unit 120(s) is (are) formed as a single unit. The radar unit(s) 120 may be attached to, and removed from, a desired location on the train via the attachment unit 190.

The radar unit(s) 120 may be configured to detect a presence and/or motion. For example, the radar unit(s) 120 may detect the motion of the at least one wheel 110 and/or the train, and activate upon detected movement. The radar unit(s) 120 may comprise a sensor configured to detect a presence and/or motion. In case the radar unit(s) 120 is (are) activated by motion, the radar system 100 may automatically conserve power.

The radar system 100 comprises an emitter 130 configured to emit radio waves 105 towards the at least one wheel 110, and a detector 140 configured to detect at least a portion of the radio waves 105 reflected from the at least one wheel 110 and generate detector data. The radar system 100 is configured to determine a wheel status at least partially based on the generated detector data. Consequently, the wheel status contains information on a status of the at least one wheel 110.

The radar unit(s) 120 comprise(s) an emitter antenna 160 configured to direct the radio waves 105 in a predetermined direction. The emitter antenna 160 may improve how specific the emitted radio waves 105 are reflected towards the detector 140. The emitter antenna 160 comprises a lens unit 165. The lens unit 165 may comprise one or more lenses configured to further improve the accuracy of the directing of the radio waves 105 towards the at least one wheel 110, and/or towards a specific location on the at least one wheel 110.

Furthermore, in Fig. 3, the radar system 100 comprises a processor 150 configured to determine the wheel status. The processor 150 may be configured to determine the wheel status based at least partially on the detector data. The wheel status may comprise at least one of a wheel parameter and a surface condition of the at least one wheel 110. The processor 150 may determine the wheel status based only on the generated detector data. The processor 150 may determine the wheel status based on a combination of the detector data and predetermined parameters of the at least one wheel 110 and/or the spatial relationship between the at least one wheel 110 and the radar unit(s) 120. The wheel parameter may be a height, width and/or depth of a part of the surface/profile/contour of the at least one wheel 110. The wheel parameter may be at least one of a flange height, a flange thickness and a flange slope quota. The predetermined parameters may be related to a contour of the at least one wheel 110, such that defects and/or evolving defects may be determined. Evolving defects may be parameters that indicate that the at least one wheel 110 soon has a defect which poses a threat to the operation of the train. The predetermined parameters may be at least one of a flange height, a flange thickness and a flange slope quota of the at least one wheel 110, e.g. when the at least one wheel 110 was mounted on the bogie of the train. A surface condition of the at least one wheel 110 may indicate wear and/or damage, e.g. a flat spot/wheel flat, a recess or pit due to a missing piece of the at least one wheel 110 and/or other conditions of the at least one wheel 110 which may have an influence on the operation and/or safety of the train. The surface condition may be related to the surface of the rolling surface/tread of the at least one wheel 110 and/or the flange of the at least one wheel 110. The surface condition may comprise information on the profile of the wheel 110. In Fig. 3, the radar unit(s) 120 comprise(s) the processor 150, i.e. the processor 150 is part of the at least one radar unit 120.

The radar unit(s) 120 comprise(s) a wireless transmitter 170 configured to transmit at least part of the detector data and/or the wheel status. The wireless transmitter 170 may transmit detector data/wheel status to a cloud service/server, a communication network, a device, a computer, and/or to an already existing system of the train, for example to allow an operator of the train or a controller of the train to see the wheel status of the at least one wheel 110. The radar unit(s) 120 may transmit the detector data to an external processor, such that at least a part of detector data may be processed elsewhere, e.g. on a cloud server, in order to determine the wheel status. The radar unit(s) 120 may transmit the wheel status 110 to a device/computer/server wirelessly and/or via a wire/cord/cable. The external processor may be part of a control unit (180).

The radar unit(s) 120 may determine a wheel status of the at least one wheel 110, wherein the wheel status indicates if the at least one wheel 110 requires maintenance. The radar unit(s) 120 may determine the wheel status of the at least one wheel 110 based, partially or fully, on the detector data with the processor 150. The radar unit(s) 120 may transmit the wheel status using the wireless transmitter 170.

The radar unit(s) 120 may determine if the wear and/or damage to the train exceeds a threshold value, and transmit a signal via the wireless transmitter, indicating that the at least one wheel 110 and/or the train need maintenance. The signal may comprise the wheel status. The wheel status may comprise one or more metrics/values/parameters which indicates that a wheel 110 and/or the train needs maintenance. The transmitted wheel status may comprise actual wheel parameters, such as flange height, flange thickness and/or flange slope quota, determined by the radar unit(s) 120.

Furthermore, the radar system 100 comprises a control unit 180. The control unit 180 is configured to receive at least part of the detector data and/or the wheel status from the radar unit(s) 120. The transmitter 170 may send detector data and/or a wheel status of the at least one wheel to the control unit 180. The control unit 180 may receive detector data and/or a wheel status of the at least one wheel 110. The control unit 180 may gather/store/collect/receive detector data and/or the wheel status of the at least one wheel 110 in one location/device, such that e.g. train personnel may see the status of the at least one wheel 110 at the control unit 180.

The control unit 180 may comprise a transmitter configured to send control signals to the radar unit(s) 120. The control signals may control the function of the radar unit(s) 120. The control unit 180 may comprise a processor configured to calculate/determine wheel parameters and/or defects of the at least one wheel 110. The radar system 100 may comprise a processor 150 in the radar unit(s) 120 and another processor 150 in the at least one control unit 180. The radar system 100 may comprise a processor 150 arranged in the control unit 180 while the radar unit(s) 120 does (do) not comprise a processor 150. The wireless transmitter 170 may transmit at least part of the detector data and/or the wheel status to the control unit 180. In Fig. 3. The radar unit(s) 120 comprise(s) a battery 200. The battery 200 is configured to power the radar unit(s) 120. Consequently, the radar unit(s) 120 is (are) self-powered, and does not need to be electrically connected to the train. Thus, the battery 200 may power the radar unit(s) 120 and the processor 150. In an embodiment, the radar unit(s) 120 and the battery 200 may be comprised in the radar unit(s) 120 form a single unit, which may be removably attached to the train.

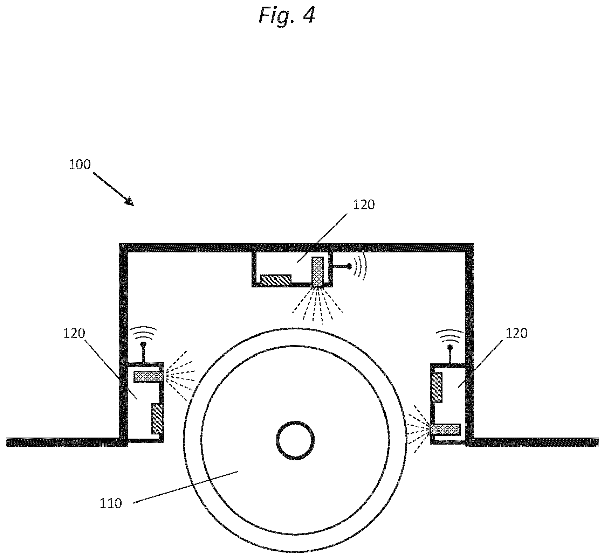

Fig. 4 schematically illustrates a radar system 100 in accordance with an embodiment of the present invention. It should be noted that the radar system 100 shown in Fig. 4 has several features in common with the radar system 100 shown in Fig. 1 and/or Fig. 3, and it is hereby referred to Fig. 1 and/or Fig. 3 and the associated texts for an increased understanding of some of the features and/or functions of the radar system 100. In Fig. 4 the at least one radar unit 120 comprises three radar units 120 arranged in proximity to the at least one wheel 110. The radar units 120 are arranged on the bogie surrounding the at least one wheel 110. The radar units 120 are arranged at different locations to generate better and/or more complete detector data, e.g. with higher resolution, in order to better determine a wheel status of the at least one wheel 110.

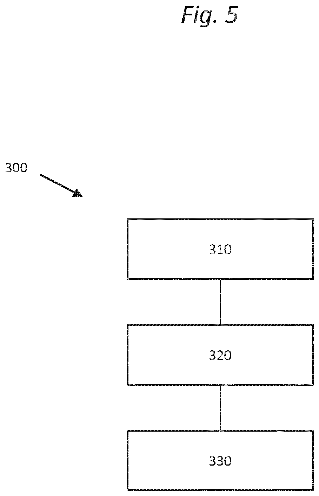

Fig. 5 schematically shows a method 300 for determining a status of at least one wheel of a train in accordance with an embodiment of the present invention. The status of the at least one wheel is determined using a radar system, wherein the radar system comprises at least one radar unit arranged on the train, wherein the at least one radar unit comprises an emitter configured to emit radio waves and a detector configured to detect radio waves.

The method 300 comprises emitting 310 radio waves towards at least one wheel, by the emitter. The emitted radio waves may be directed towards the at least one wheel, via alignment of the at least one radar unit with respect to the at least one wheel. Furthermore, the emitted radio waves may be directed using a transmitter antenna, e.g a lens unit.

The method comprises generating 320 detector data based on detected/received radio waves, by the detector.

Furthermore, the method 300 comprises determining 330 a wheel status at least partially based on the detector data. The wheel status is related to the status of the at least one wheel. The wheel status may be determined based on the generated detector data and/or a combination of the generated detector data and predetermined wheel status/parameters. The predetermined wheel status and/or wheel parameters may be related to the size and/or shape of the wheel, such as a contour/profile of the at least one wheel, e.g. when it is new or newly turned down. The wheel status and/or wheel parameters may be related to the setup of the at least one wheel relative the at least one radar unit, for example the distance from the at least one radar unit to the at least one wheel. The wheel status may comprise information on a contour/profile of at least a part of the at least one wheel, e.g. of the rolling surface or the flange of the wheel. The wheel status may be calculated/determined using a processor. For example, generated detector data, which comprises information on e.g. the incident angle of the radar wave and/or the time travelled from the emitter to the detector, may be used to calculate/determine if there are damages/defects on the at least one wheel.

The method 300 may further comprise transmitting at least part of the detector data and/or the wheel status. For example, to a communication network, a cloud service and/or a device/computer. The transmitting may be performed by a wireless transmitter.

The person skilled in the art realizes that the present invention by no means is limited to the preferred embodiments described above. On the contrary, many modifications and variations are possible within the scope of the appended claims. For example, one or more of the at least one radar unit 120 may have different shapes, dimensions and/or sizes than those depicted/described. Furthermore, the arrangement of the different components of the radar system 100 may be different than those depicted/described.

## Claims

1. A radar system (100) for determining a status of at least one wheel (110) of a train, comprising
at least one radar unit (120) arranged on the train, comprising
an emitter (130) configured to emit radio waves (105) towards the at least one wheel, and
a detector (140), configured to detect at least a portion of the radio waves reflected from the at least one wheel and generate detector data,
wherein the radar system is configured to determine a wheel status at least partially based on the generated detector data.

2. The radar system according to claim 1, wherein the radar system is configured to determine a wheel status based at least partially on at least one of the time travelled and the incident angle to the at least one radar unit for a detected radio wave of the radio waves.

3. The radar system according to claim 1 or 2, wherein the radar system is configured to determine the wheel status at least partially based on the difference between a predetermined wheel status and the wheel status.

4. The radar system according to any one of the preceding claims, wherein the at least one radar unit is arranged on a bogie of the train.

5. The radar system according to any one of the preceding claims, wherein the radar system comprises a processor (150) configured to determine the wheel status based at least partially on the detector data, wherein the wheel status comprises at least one of a wheel parameter and a surface condition of the at least one wheel.

6. The radar system according to claim 5, wherein the at least one radar unit comprises the processor.

7. The radar system according to claim 5 or 6, wherein the wheel parameter comprises at least one of a flange height, a flange thickness and a flange slope quota.

8. The radar system according to any one of the preceding claims, wherein the at least one radar unit comprises a wireless transmitter (170) configured to transmit at least part of the detector data and/or the wheel status.

9. The radar system according to claim 8, wherein the radar system comprises a control unit (180), wherein the control unit is configured to receive at least part of the detector data and/or the wheel status from the at least one radar unit.

10. The radar system according to any one of the preceding claims, wherein the at least one radar unit comprises at least one attachment unit (190), configured to removably attach the at least one radar unit to the train.

11. The radar system according to claim 10, wherein the attachment unit comprises a magnet unit.

12. The radar system according to any one of the preceding claims, wherein the at least one radar unit comprises a battery (200).

13. The radar system according to any one of the preceding claims, wherein the at least one radar unit is integrally formed.

14. The radar system according to any one of the preceding claims, wherein the radar system comprises a plurality of radar units for the at least one wheel respectively.

15. A method (300) for determining a status of at least one wheel of a train using a radar system, wherein the radar system comprises at least one radar unit, having an emitter configured to emit radio waves and a detector configured to detect radio waves, arranged on the train, the method comprising
emitting (310) radio waves towards at least one wheel, by the emitter,
generating (320) detector data based on detected radio waves, by the detector,
determining (330) a wheel status at least partially based on the detector data.
